# FASCICULE DE BREVET EUROPEEN

(11) **EP 2 140 500 B1**
(45) Date de publication et mention de la délivrance du brevet: **04.04.2018**
(21) Numéro de dépôt: 08805664.3
(22) Date de dépôt: 17.04.2008
(51) Int. Cl.: E04D 13/18, H01L 31/048, H01L 31/042, F24J 2/52, H02S 20/23, H02S 30/10

(54) **BÂTI SUPPORT D'UN PANNEAU TEL QUE PANNEAU PHOTOÉLECTRIQUE ET PAROI EXTÉRIEURE D'UN BÂTIMENT COMPORTANT DE TELS BÂTIS**
TRÄGERRAHMEN FÜR EINE PHOTOELEKTRISCHE TAFEL UND GEBÄUDEAUSSENWAND MIT SOLCHEN TAFELN
BEARING FRAME FOR A PANEL SUCH AS A PHOTOELECTRIC PANEL AND BUILDING EXTERNAL WALL INCLUDING SUCH PANELS

(30) Priorité: 20.04.2007 FR 0754611
(43) Date de publication de la demande: 06.01.2010
(73) Titulaire: Reyal, Jean-Pierre, 95610 Eragny (FR); Solarte, 66500 Ria Sirach (FR)
(72) Inventeur: REYAL, Jean-Pierre, 95610 Eragny (FR); JAUTARD, Yves, 66820 Vernet Les Bains (FR)
(74) Mandataire: Benech, Frédéric
(86) Numéro de dépôt international: PCT/FR2008/050689
(87) Numéro de publication internationale: WO 2008/145903

(56) Documents cités:
- EP-A- 0 619 404
- WO-A-02/05979
- WO-A-2005/012667
- WO-A-2006/043658
- WO-A-2006/076719
- WO-A-2006/136365
- DE-A1-102005 019 857
- JP-A- 2000 129 869
- US-A- 5 524 401
- US-A1- 2002 078 991

## Description

L'invention est relative à un bâti support d'un panneau, du type comprenant une structure périphérique destinée à recevoir un panneau tel qu'un panneau de cellules photovoltaïques.

Ce bâti support d'un panneau est destiné en particulier à supporter des panneaux disposés sur une paroi d'un bâtiment et notamment sur un toit ou sur une façade.

Afin d'équiper des bâtiments tels que des maisons, de générateurs d'électricité utilisant l'énergie solaire, on dispose par exemple sur le toit de ces bâtiments, des ensembles de panneaux constitués d'une pluralité de cellules photovoltaïques. Ces panneaux sont constitués en général d'un empilage de diverses couches de verre, de silicium, de connecteurs et de polymères. Les cellules de silicium, généralement carrées, ont une dimension pouvant atteindre 200 mm de côté. Les cellules sont assemblées en série puis collées entre deux feuilles de verre ou entre une feuille de verre et diverses couches de polymère. A titre d'exemple, un module de tension nominale de 12 V est généralement composé par la mise en série de 36 cellules monocristallines ou polycristallines. Ces assemblages de 36 cellules sont ensuite assemblés en parallèle. Dans le cas d'un module de 24 V, on utilise 72 cellules de silicium.

Ces panneaux ou modules photovoltaïques sont disposés sur des cadres dont les montants sont constitués de profilés en aluminium assemblés qui leur confèrent une rigidité mécanique et qui permet de les fixer sur le toit. En outre, les panneaux sont connectés entre eux, ainsi qu'avec un circuit de distribution destiné à alimenter les installations électriques.

Des bâtis support de panneaux solaires sont connus des documents WO 2006/043658 - A1 et US 2002/0078991 - A1.

En général, plusieurs panneaux sont disposés les uns à côté des autres de façon à former une surface active importante. Il est alors nécessaire d'assurer une bonne étanchéité aux jonctions entre deux bâtis adjacents de façon à éviter les infiltrations d'eau en cas de pluie ou de fonte de neige. Pour cela, on réalise des joints dans les zones de jonction de deux panneaux adjacents. Mais, ces joints sont parfois difficiles à réaliser et n'assurent pas toujours une étanchéité satisfaisante.

De tels panneaux sont notamment connus du document EP 0 619 404 - A2.

Par ailleurs, les cadres en aluminium sont plutôt volumineux du fait des faibles propriétés mécaniques de ce métal. Ils peuvent en outre avoir des comportements à la corrosion qui ne sont pas toujours satisfaisants. Enfin, ils demandent beaucoup de main d'oeuvre pour leur mise en place et notamment pour la réalisation des joints.

Enfin, les cadres en aluminium ne sont pas toujours adaptés à la réalisation des jonctions électriques entre les panneaux de cellules photovoltaïques et l'extérieur, et notamment avec les panneaux photoélectriques supportés par des cadres adjacents.

Le but de la présente invention est de remédier à ces inconvénients en proposant un moyen pour supporter des panneaux tels que des panneaux électriquement actifs et notamment des panneaux ou des modules photovoltaïques qui permettent d'assurer une étanchéité sûre et qui soit facile à mettre en place. Ce moyen pour supporter les panneaux électriquement actifs peut, en outre, avoir l'avantage d'être plus léger que les cadres connus. Il peut également permettre de réaliser des jonctions électriques qui ne détériorent pas l'aspect esthétique des surfaces constituées par ces ensembles de panneaux.

A cet effet, l'invention a pour objet un bâti support d'un panneau, du type comprenant une structure périphérique destinée à recevoir un panneau, constituée d'au moins trois montants formant un cadre dont la face inférieure constitue un plan de référence. Au moins un montant comporte une aile s'étendant sur toute sa longueur et vers l'extérieur du cadre, parallèlement à la face supérieure du cadre. Le bâti est constitué d'au moins une bande métallique prédécoupée, emboutie, pliée et assemblée par soudage, et notamment par soudage laser. La structure périphérique est creuse et le bâti support d'un panneau comprend, en outre, des moyens de connexion interne et externes et un moyen de liaison électrique entre les moyens de connexion interne et externes disposé à l'intérieur de la structure périphérique creuse.

La bande métallique peut être en acier, en particulier en inox austénique, en acier bas carbone galvanisé éventuellement prélaqué, en alliage à dilation contrôlée du type Fer Nickel ou inox ferritique.

De préférence, la bande métallique est constituée d'un matériau ayant un coefficient de dilatation compris entre 4 x 10⁻⁶/K et 11 x 10⁻⁶/K, compatible avec celui du verre.

La hauteur entre la face inférieure de l'aile s'étendant à l'extérieur du cadre et le plan de référence du cadre est supérieure à la hauteur entre le plan de référence du cadre et la face supérieure du montant situé à l'opposé du montant comportant l'aile s'étendant vers l'extérieur du cadre.

Deux montants adjacents peuvent comporter, chacun, une aile s'étendant sur toute sa longueur et vers l'extérieur du cadre, parallèlement à la face supérieure du cadre.

A la jonction entre les deux montants du cadre qui portent des ailes s'étendant vers l'extérieur du cadre, au moins une aile s'étend vers l'extérieur du cadre parallèlement à la direction longitudinale du montant qui porte ladite aile, de façon à former une jonction entre les deux ailes adjacentes de telle sorte que les deux ailes adjacentes constituent une aile continue s'étendant le long du coin du cadre formé par les deux montants adjacents.

De préférence, la jonction entre les deux ailes comporte une zone emboutie vers le haut du cadre adaptée pour pouvoir s'emboîter sur au moins une extrémité d'une aile s'étendant vers l'extérieur d'un cadre.

De préférence, les coins des extrémités des ailes adjacentes situées à l'opposé de la zone de jonction des deux ailes, sont coupés à 45°.

La partie centrale du bâti, délimitée par la structure périphérique, est en général ouverte.

Il peut être destiné à recevoir un panneau électriquement actif tel qu'un panneau de cellules photovoltaïques, et les moyens de connexion interne et externes et le moyen de liaison électrique entre les moyens de connexion interne et externes sont adaptés pour connecter électriquement un panneau électriquement actif porté par le bâti à un circuit extérieur au bâti.

De préférence, la structure périphérique comprend, à sa partie supérieure, une gorge s'étendant sur toute sa périphérie intérieure, et destinée à recevoir la périphérie d'un panneau.

L'invention concerne également la paroi extérieure d'un bâtiment qui comporte un assemblage de bâtis conformes à l'invention disposés de façon à constituer un pavage.

L'assemblage de bâtis peut comprendre au moins une colonne de bâtis rectangulaires disposés les uns au dessus des autres. Un bâti supérieur et un bâti inférieur adjacents sont disposés de telle sorte que le montant de cadre situé à la partie inférieure du bâti supérieur comporte une aile qui s'étend au dessus du montant de cadre situé à la partie supérieure du bâti inférieur.

Les bâtis peuvent comprendre une seule aile s'étendant le long d'un montant. L'assemblage de bâtis comprend alors au moins deux colonnes de bâtis adjacentes et une gouttière s'étendant sur toute la hauteur de l'assemblage de bâtis est disposé en appui sur les bords latéraux des bâtis en regard l'un de l'autre, de façon à recouvrir l'espace situé entre les deux colonnes.

Les bâtis peuvent comprendre également deux ailes s'étendant le long de deux montants adjacents du cadre. L'assemblage de bâtis comprend au moins deux colonnes de bâtis adjacentes et, le long de la ligne de jonction de deux colonnes adjacentes, les bâtis d'une colonne comportent des ailes qui s'étendent au dessus des montants latéraux des bâtis de l'autre colonne.

De préférence, des caches s'étendent au moins le long des bords latéraux et du bord horizontal supérieur de l'assemblage, en venant en recouvrement des montants des bâtis situés à la périphérie de l'assemblage.

Des joints peuvent être disposés entre les montants de bâtis et les ailes, gouttières et caches venant en recouvrement de ces montants de façon à assurer l'étanchéité.

La paroi extérieure d'un bâtiment peut constituer un toit, les bâtis supportant des panneaux photoélectriques.

L'invention va maintenant être décrite de façon plus précise mais non limitative, en regard des figures annexées, dans lesquelles :
- la figure 1 est une vue en perspective d'un bâti support d'un panneau électriquement actif ;
- la figure 2 est une vue schématique d'une bande métallique découpée et pré pliée destinée à la fabrication d'un bâti de support d'un panneau tel que représenté à la figure 1 ;

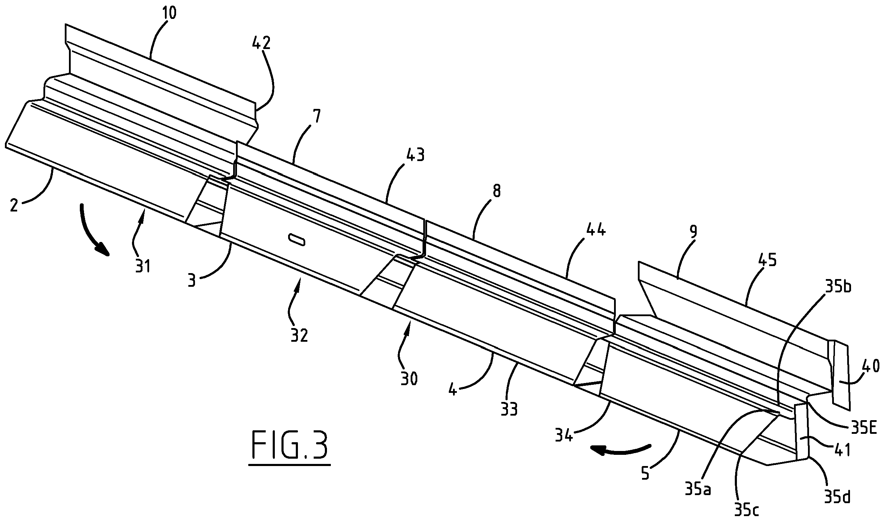

- la figure 3 est une vue en perspective d'une phase intermédiaire de fabrication d'un bâti support d'un panneau à l'aide d'une bande métallique représentée à la figure 2 ;
- la figure 4 est une vue éclatée d'un bâti support d'un panneau sur lequel on monte un panneau électriquement actif tel que un panneau de cellules photoélectriques ;
- la figure 5 est une vue en perspective partielle d'un coin d'un bâti tel que représenté à la figure 1, comportant deux ailes destinées à assurer l'étanchéité entre deux bâtis adjacents ;
- la figure 6 est une vue en perspective, vue de l'extérieur, du coin d'un bâti tel que représenté à la figure 5 ;
- la figure 7 est une vue en coupe de la jonction entre deux bâtis support de panneaux adjacents ;
- la figure 8 est une représentation schématique d'un assemblage de bâti support de panneaux du type des bâtis représentés à la figure 1 disposés sur le toit d'un bâtiment ;
- les figures 9, 10 et 11 représentent de façon détaillée l'assemblage et la jonction de quatre bâtis support de panneaux adjacents ;
- la figure 12 est une représentation schématique d'un deuxième mode de réalisation d'un bâti support de panneaux ;
- la figure 13 est une représentation schématique d'un assemblage sur le toit d'une maison d'un ensemble de bâti support de panneaux du type du bâti représenté à la figure 12 ;
- la figure 14 est une représentation schématique vue de dessus de quatre bâtis du type du bâti de la figure 12 disposés de façon adjacente sur le toit d'un bâtiment ;
- la figure 15 est une vue en coupe transversale de l'assemblage de panneaux représenté à la figure 14.

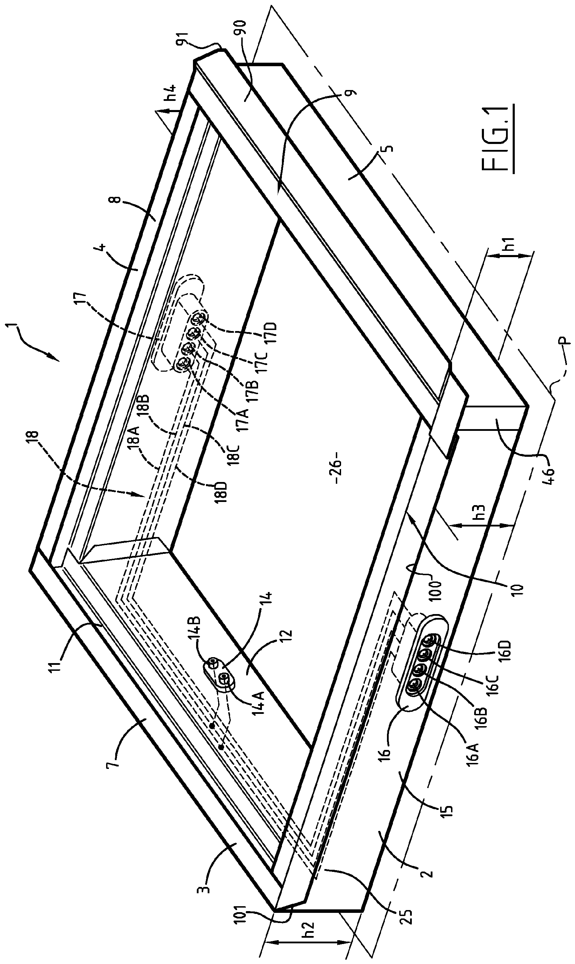

On va tout d'abord décrire un premier mode de réalisation d'un bâti support d'un panneau tel que représenté à la figure 1. Ce bâti est destiné à supporter un panneau électriquement actif du type panneau de cellules photoélectriques destiné à créer un générateur électrique à énergie solaire disposé sur le toit d'un bâtiment.

Ce bâti, support d'un panneau, comprend une structure périphérique, repérée généralement par 1 à la figure 1, en forme de cadre rectangulaire constitué de quatre montants 2, 3, 4, 5. Ces montants comportent à leur partie supérieure des volets horizontaux 7, 8, 9, 10, rabattus vers l'intérieur et qui délimitent à la périphérie du cadre une gorge 11, orientée vers l'intérieur du cadre, et destinée à recevoir un panneau électriquement actif, tel qu'un panneau cellules photovoltaïques.

Deux volets 9 et 10 correspondant à deux côtés adjacents 2 et 5 s'étendent également vers l'extérieur du cadre, de façon à former des ailes 90, 100, destinées à assurer l'étanchéité entre deux bâtis adjacents, comme cela sera expliqué ultérieurement. En effet, les cadres sont destinés à être disposés les uns à côté des autres de façon à assurer un pavage d'une surface, par exemple d'un toit. Sur un tel pavage, il est nécessaire de pouvoir assurer l'étanchéité le long des lignes de séparation de deux cadres de bâti adjacents.

Chaque montant 2, 3, 4, 5 du cadre, qui constitue la structure périphérique du bâti, est creux de façon notamment à pouvoir recevoir des moyens de connexion électrique. Comme cela sera expliqué ultérieurement, il est réalisé par pliage d'une bande métallique.

La paroi intérieure 12 du montant 3, comporte un connecteur 14 comprenant deux plots 14A et 14B permettant le branchement d'un panneau électriquement actif supporté par le bâti. Ce connecteur 14 est par exemple un connecteur comprenant un corps en matière plastique surmoulé dans un trou prévu sur la face 12 du montant 3.

La face externe du montant 2, perpendiculaire au montant 3, comporte un moyen de connexion externe 16 également surmoulé dans un trou prévu sur la paroi 15 du montant 2. Ce moyen de connexion externe comporte quatre plots de connexion 16A, 16B, 16C et 16D. De la même façon, il est prévu sur la paroi externe du montant 4 opposé au montant 2 (non visible sur la figure) un deuxième moyen de connexion externe 17 également surmoulé comportant également quatre plots de connexion 17A, 17B, 17C et 17D.

Les différents plots des moyens de connexion externe 16 et 17 et du moyen de connexion interne 14 sont reliés entre eux par un moyen de liaison électrique 18. Ce moyen de liaison électrique comporte une pluralité de câbles 18A, 18B, 18C, 18D permettant d'assurer des liaisons entre les différents plots des différents moyens de connexion de façon à assurer les liaisons adaptées à l'utilisation du bâti.

Ce moyen de liaison électrique a l'avantage d'être disposé à l'intérieur des montants creux et ainsi de ne pas être visibles depuis l'extérieur des bâtis et donc de permettre des ensembles ayant une qualité esthétique satisfaisante.

Les moyens de connexion interne, externe et les circuits de connexion entre ces différents moyens de connexion permettent de connecter entre eux les ensembles de panneaux de façon, par exemple lorsqu'il s'agit de panneaux générateurs d'électricité, à réaliser des montages en série ou des montages en parallèle. L'homme du métier sait réaliser de tels montages.

D'autres montages sont possibles et l'homme du métier sait déterminer les liaisons qui sont nécessaires pour chaque application en fonction notamment de la nature du panneau électriquement actif disposé sur le bâti.

Comme on l'a indiqué précédemment, les montants 2, 3, 4 et 5 constituent un cadre qui forment la structure périphérique creuse qui entoure la partie centrale 26 qui, en général, est ouverte. Cependant, rien ne s'oppose à ce que cette partie centrale 26 soit fermée par un panneau disposé dans le fond du cadre.

On va maintenant décrire plus en détail les ailes 90 et 100 qui s'étendent le long des montants 5 et 2 et qui sont destinés à assurer l'étanchéité à la jonction entre deux bâtis adjacents, de façon à indiquer comment ces ailes sont adaptées pour permettre des assemblages ayant une bonne étanchéité.

Pour cela on considère un plan de référence P qui est défini par la face inférieure du bâti. L'aile 90 est réalisée de telle sorte que sa face inférieure se situe à une hauteur h1 au-dessus du plan de référence P qui est supérieure ou égale à la hauteur h2 qui sépare le plan P et la face supérieure du montant 3 constitué par le volet 7.

Avec cette disposition, et comme cela sera indiqué ultérieurement, le montant 3 d'un bâti peut se glisser sous le volet du côté opposé correspondant d'un deuxième bâti adjacent. De la même façon, la hauteur h3 entre le plan P et la face inférieure de l'aile 100 s'étendant vers l'extérieur le long du montant 2 est supérieure ou égale à la hauteur h4 entre le plan P et la face supérieure du montant 4 constitué par le volet 8. De la même façon que dans le cas précédent, cette disposition permet de glisser le montant 4 d'un bâti sous l'aile extérieure correspondante au côté opposé d'un deuxième bâti adjacent au premier bâti.

Les ailes 90 et 100 sont également conformées de façon à pouvoir réaliser des assemblages de plusieurs bâtis et notamment permettre de réaliser des pavages de bâtis de façon à recouvrir une surface par exemple d'un pan de toit.

L'aile 100 du montant 2 est généralement plate et comporte à son extrémité située du côté du montant 3 qui ne comporte pas d'aile s'étendant vers l'extérieur, un coin coupé 101 qui est coupé à 45° de façon à po uvoir s'assembler avec l'aile d'un deuxième bâti dont le coin jouxte le coin du bâti considéré.

L'aile 100 s'étend sur toute la longueur du montant 2 sans s'étendre au-delà de la longueur de ce montant.

L'aile 90 qui s'étend le long du montant 5, comporte comme dans le cas précédent, un coin coupé 91 situé à l'angle du bâti qui assure la jonction entre le montant 5 et le montant adjacent 4 qui ne comporte pas d'aile s'étendant vers l'extérieur.

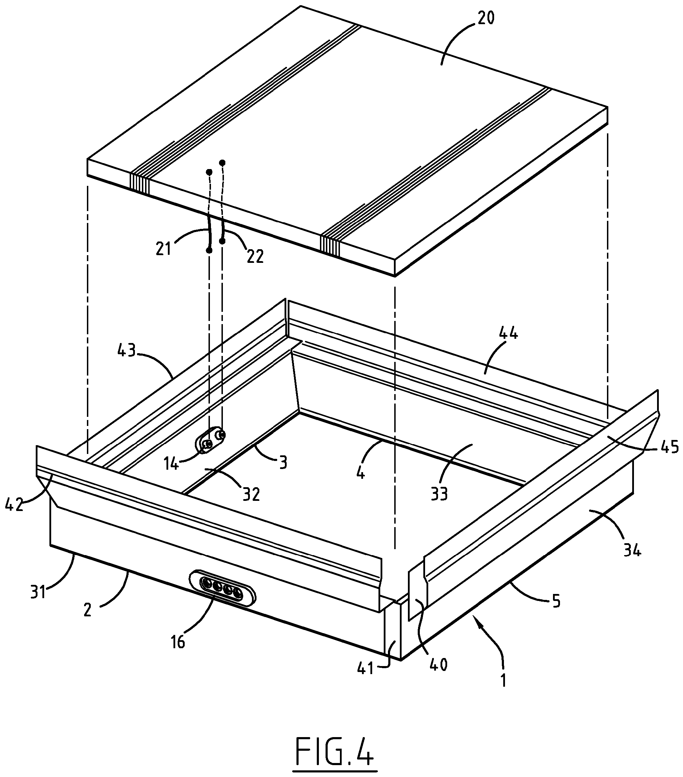

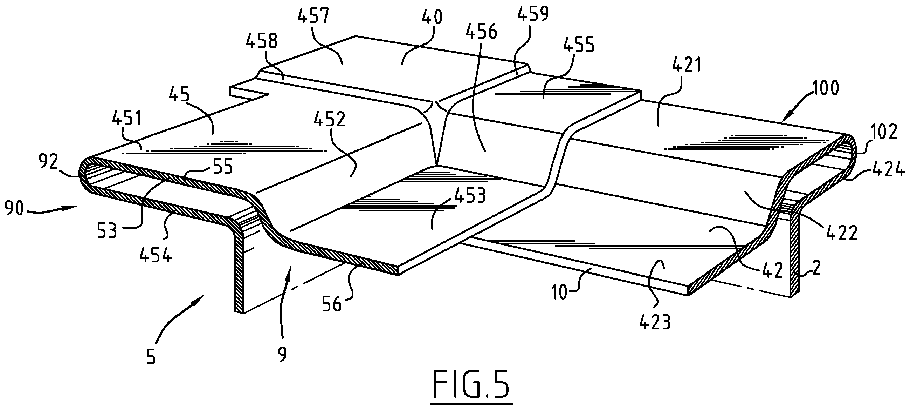

En se référant aux figures 4, 5 et 6 notamment, on va décrire plus en détail les ailes des montants 2 et 5.

La partie supérieure du montant 2, qui constitue l'aile 100 et le volet 10, comprend une bande inférieure 424 qui s'étend vers l'extérieur et qui se prolonge par un rabat 42 qui a été rabattu par pliage autour de l'arête extérieure 102 de l'aile 100. Ce rabat comporte une première bande horizontale extérieure 421 qui, du fait du pliage, se retrouve au-dessus de la bande inférieure 424. Cette bande extérieure 421 se prolonge par une bande de changement de niveau 422 qui assure la jonction avec une bande interne 423 s'étendant vers l'intérieur du cadre. Cette bande 423 délimite la partie supérieure de la gorge 11 destinée à recevoir un panneau porté par le bâti.

La bande de changement de niveau 422 est suffisamment haute pour que la face 423 se situe par rapport au plan P à une hauteur inférieure à la bande inférieure 424 qui s'étend vers l'extérieur du cadre.

L'aile 90 du montant adjacent 5 est constituée de la même façon par une bande inférieure 454 qui s'étend horizontalement vers l'extérieur du cadre et qui se poursuit par un rabat 45 plié autour d'une ligne de pliage 92 qui correspond à l'arête extérieure de l'aile 90. La partie de l'aile qui s'étend sur la longueur du montant 5 comprend une première bande supérieure 451 qui est séparée par une bande de changement de niveau 452, d'une bande intérieure 453 s'étendant le long du montant 5 et qui constitue la face supérieure de la gorge 11 destinée à recevoir un cadre.

La hauteur de la bande de changement de niveau 452 est adaptée pour que la bande intérieure 453 du rabat 45 vienne au contact de la bande interne 423 du rabat 42 du montant adjacent.

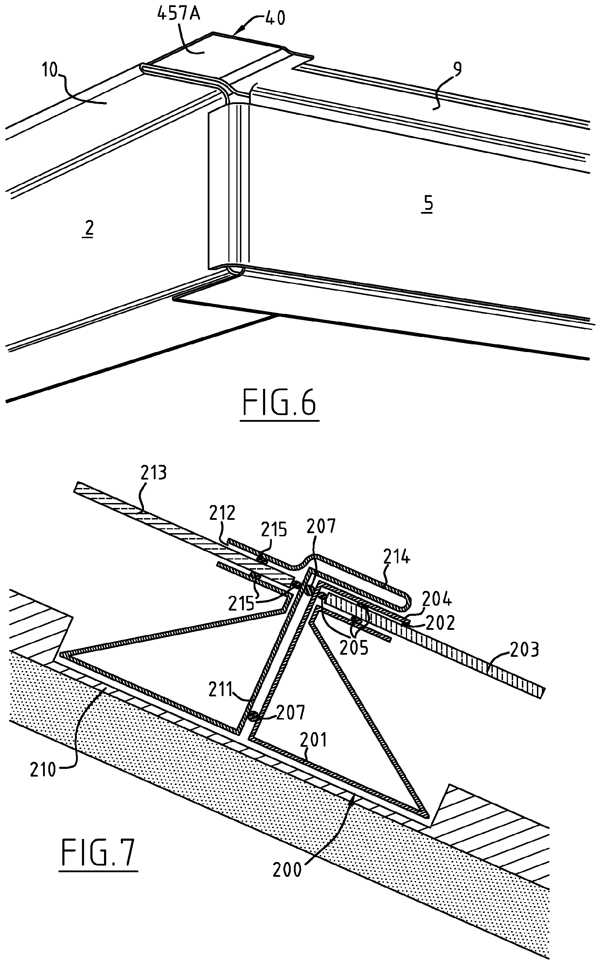

Comme on l'a indiqué précédemment, le volet 45 qui constitue la partie supérieure de l'aile 90 se prolonge par une palette 40 qui comprend une première plaque plane 455 qui est adaptée pour venir en contact de la bande extérieure 421 de l'aile 100, et une deuxième plaque 457 disposée un peu au-dessus de la plaque 455 et qui est destinée à former un logement 457A que l'on voit sur la figure 6 et qui est destinée à s'ajuster aux coins de cadres adjacents lorsque les cadres sont disposés de façon à constituer un pavage. Les plaques 455 et 457 sont reliées entre elles par une bande de changement de niveau 459 et aux bandes constituant la face supérieure du volet 45 par des bandes de changement de niveaux 458 et 456.

On va maintenant décrire comment les cadres peuvent être disposés les uns à côté des autres de façon à former un pavage en assurant une bonne étanchéité entre deux cadres adjacents.

On considère tout d'abord la figure 7 dans laquelle on a représenté en coupe de façon agrandie la jonction entre un premier cadre 200 et un deuxième cadre 210 adjacent. On suppose que ces cadres sont montés sur une surface inclinée telle qu'un pan de toit, et que le cadre 200 est en aval du cadre 210. Le cadre 200 comprend un montant 201 dont la partie supérieure comporte un volet 204 s'étendant vers l'intérieur et délimitant une gorge 202 qui reçoit le bord d'un panneau 203. Des joints 205 sont disposés dans cette gorge de façon à assurer une bonne étanchéité.

Le cadre disposé en amont 210 comprend un montant latéral 211 s'étendant parallèlement au montant 201 du cadre aval 200. Le montant latéral 211 du cadre amont comporte à sa partie supérieure une aile extérieure 214 s'étendant vers l'extérieure du cadre et venant recouvrir le volet supérieur 204 du montant 201 du cadre aval 200.

L'aile extérieure 214 est prolongée vers l'intérieur du cadre par un volet 215 qui délimite une gorge 212 recevant un panneau 213. Entre le panneau 213 et les bords de la gorge 212 des joints 215 sont disposés pour assurer l'étanchéité. Entre les montants 201 du panneau aval et 211 du panneau amont 210, des joints 207 sont disposés qui assurent d'une part un contact élastique entre les panneaux et d'autre part qui assurent une certaine étanchéité.

L'aile extérieure 214 du panneau amont 210 peut venir recouvrir la partie supérieure du montant 201 du panneau aval 200 parce que, comme il a été indiqué précédemment, la hauteur qui existe entre le plan de référence des cadres et la face inférieure de l'aile 214 est supérieure à la hauteur qui sépare le plan de référence des cadres et la face supérieure du volet 204 du cadre aval 200.

Cette disposition, les deux cadres disposés l'un au-dessus de l'autre, assure une étanchéité de la même façon que des tuiles d'un toit. Cette étanchéité résultant du recouvrement partiel du bâti aval par le bâti amont.

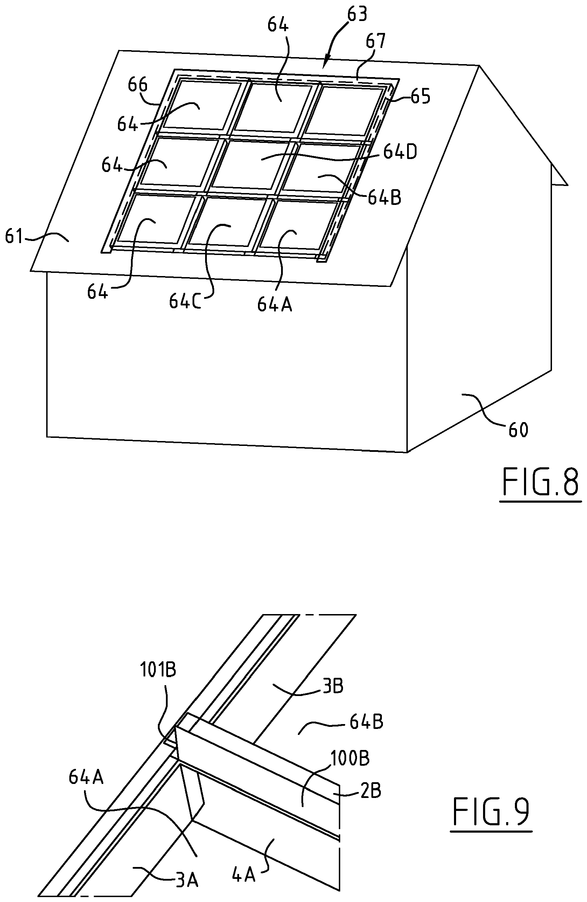

Aux figures 9, 10 et 11, on a représenté trois stades de montage de quatre cadres adjacents de façon à former un carré.

A la figure 9, on a représenté un premier cadre 64A dont le montant 4A est adjacent au montant 2B d'un cadre 64B situé en amont par rapport au cadre 64A.

Les montants 3A et 3B adjacents respectivement aux montants 4A et 2B des cadres 64A et 64B sont dans le prolongement l'un de l'autre.

Le montant 2B du cadre 64B comporte une aile extérieure 100B qui vient recouvrir la partie supérieure du montant latéral 4A du cadre 64A. Le coin coupé 101B de l'aile 100B du cadre 64B vient s'adapter au-dessus de la jonction des montants 3 et 4A du cadre 64A.

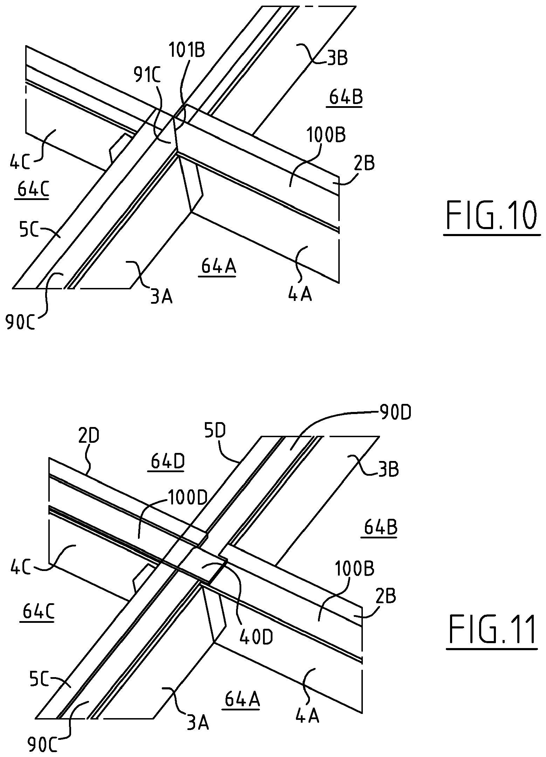

A la figure 10, on a représenté le montage précédent auquel on a rajouté un troisième cadre 64C disposé latéralement par rapport au cadre 64A adjacent au montant 3A du cadre 64A. Le cadre 64C a un montant 5C adjacent au montant 3A du cadre 64A et un montant 4C qui vient dans le prolongement du montant 4A du cadre 64A. Le montant 5C du cadre 64C comporte une aile extérieure 90C qui vient en recouvrement de la face supérieure du montant 3A du cadre 64A. Le coin coupé 91C de l'aile 90C du cadre 64C vient s'ajuster avec le coin coupé 101B de l'aile 100B du cadre 64D. Ainsi, les montants 3A et 4A du bâti 64A sont recouverts par les ailes extérieures 90C et 100B des bâtis 64C et 64B respectivement. En outre, les faces supérieures des ailes 90C et 100B des deux bâtis 64C et 64B sont au même niveau, mais sont en surépaisseur par rapport aux faces supérieurs des montants 4C et 3B des bâtis 64C et 64D.

A la figure 11, on a représenté l'ensemble des trois bâtis précédents auquel on a rajouté un quatrième bâti 64D qui comporte un montant 2D adjacent au montant 4C du bâti 64C et un montant 5D adjacent au montant 3B du cadre du bâti 64B. Le montant 5D du bâti 64D comporte une aile 90D s'étendant vers l'extérieur et venant au-dessus de la face supérieure du montant 3B du bâti 64B. De la même façon, le montant 2D du bâti 64D comporte une aile extérieure 100D venant recouvrir la face supérieure du montant 4C du bâti 64C. Comme on l'a indiqué précédemment, l'aile 90D se prolonge par une palette 40D qui vient recouvrir la jonction des pans coupés 91C et 101B des ailes 90C et 100B des bâtis 64C et 64B respectivement.

Du fait de sa conformation qui a été décrite précédemment, la palette 40D s'adapte aux différences de niveaux qui résultent de la présence des différentes ailes des différents bâtis. Ainsi, les quatre bâtis s'ajustent parfaitement de telle sorte que les bâtis qui sont en amont recouvrent au moins partiellement les bords des bâtis qui sont en aval et ainsi assurent une bonne étanchéité, et notamment une étanchéité à la pluie lorsque ces bâtis sont montés sur des toitures.

Le bâti tel qu'il vient d'être décrit et l'assemblage de ces bâtis permet de réaliser sur le toit 61 d'un bâtiment 60 une surface constituée de bâtis support de panneaux 64 adjacents dont les jonctions sont étanches. En particulier, quatre bâtis 64A, 64B, 64C et 64D.

Afin d'assurer parfaitement l'étanchéité de cet ensemble, la surface recouverte de bâtis ou des panneaux 64 est entourée de volets 63 s'étendant le long de l'arête supérieure de la surface de panneaux, et des volets latéraux 65 et 66 recouvrant les bords latéraux de surface recouverte de panneaux.

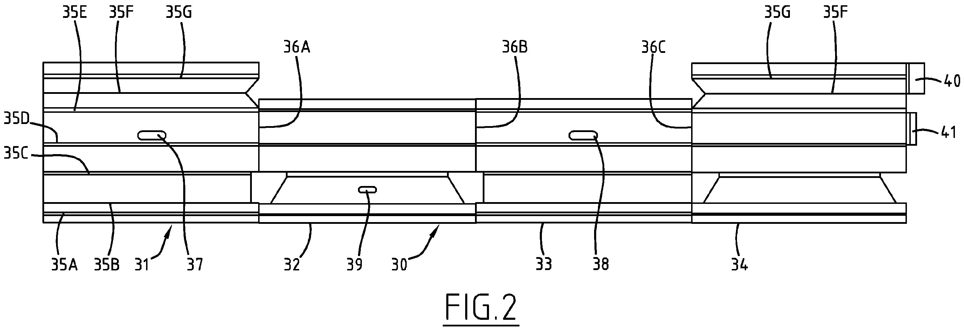

Le bâti tel qu'il vient d'être décrit peut être fabriqué par différents moyens, et notamment par pliage d'une bande métallique prédécoupée telle que la bande métallique représentée à la figure 2.

La bande métallique 30, représentée à la figure 2, est prédécoupée de façon à comprendre quatre panneaux 31, 32, 33, 34 séparés par des lignes de pliage verticales 36A, 36B et 36C, et destinés chacun, après pliage, à former les montants respectifs 2, 3, 4, 5. Cette bande 30 comporte des lignes de pliage horizontales 35A, 35B, 35C, 35D, 35E, 35F et 35G s'étendant sur l'ensemble de la longueur de la bande ce qui permet d'effectuer des pliages pour à former des ensembles tubulaires.

Lorsque le bâti est destiné à recevoir un panneau électriquement actif qui doit pouvoir être connecté à un circuit extérieur, le panneau 31 comporte une ouverture 37 destinée à recevoir un moyen de connexion externe 16, le panneau 32 comporte une ouverture 39 destinée à recevoir un moyen de connexion interne 14 et le panneau 33 comporte une ouverture 38 destinée à recevoir un deuxième moyen de connexion externe 17.

Comme représenté à la figure 4, dans une phase intermédiaire de fabrication, la bande prédécoupée 30 peut être repliée selon les lignes de pliage longitudinale 35A, 35B, 35C, 35D, 35E notamment, pour former des ensembles tubulaires correspondant aux panneaux 31, 32, 33, 34. Cet ensemble peut alors être replié autour des lignes de pliage verticale 36A, 36B, 36C (non visibles sur la figure 4) de façon à former une structure fermée de forme généralement rectangulaire. Les panneaux comportent des rabats 42, 43, 44, 45 qui, après pliage, peuvent former les volets 10, 7, 8 et 9 respectivement, ainsi que les ailes extérieures s'étendant le long de montants du cadre.

La structure telle qu'elle vient d'être décrite, une fois qu'elle est réalisée, forme un ensemble rectangulaire avec les volets 41, 42, 43 et 44 pouvant recevoir un panneau électrique, tel qu'un panneau photovoltaïque 20, que l'on vient déposer à l'intérieur du cadre et que l'on branche en connectant les conducteurs 21 et 22 de sortie de la cellule photovoltaïque. Ces connecteurs électriques 21 et 22 sont connectés aux plots 14A et 14B du moyen de connexion interne 14, comme cela est représenté à la figure 4.

Une fois le panneau photovoltaïque disposé à l'intérieur du cadre et branché, on peut rabattre les rabats 42, 43, 44 et 45 et les souder de façon à assurer un maintien ferme du panneau 20 dans le cadre ou sur le bâti.

Afin de pouvoir supporter dans des bonnes conditions des panneaux photovoltaïques soumis aux intempéries, la bande métallique doit être constituée d'un alliage ayant des caractéristiques mécaniques élevées, un coefficient de dilatation de préférence compatible avec le verre et qui de préférence ait une bonne résistance à la corrosion atmosphérique. Le coefficient de dilatation du matériau constituant le bâti doit être de préférence compatible avec celui du verre, de façon notamment à réduire le cisaillement des joints élastomères disposés entre le bâti et le panneau photovoltaïque qui assurent l'étanchéité.

En effet, en service, ces ensembles peuvent s'échauffer très notablement notamment sous l'effet du rayonnement solaire, ce qui conduit à des dilatations pouvant cisailler les joints si les coefficients de dilatation sont mal adaptés.

L'alliage peut être par exemple de type N485 défini dans la norme ISO 6372, dont le coefficient de dilation de l'ordre de 9,1 x 10⁻⁶/K entre 0°C et 100°C, est proche de celui du verre et dont la limite d'élasticité est de l'ordre de 250 MPa. Lorsque le cadre est fabriqué avec cet alliage dont la composition chimique comprend essentiellement environ 48% de nickel, 6% de chrome et 45% de fer, il doit être protégé contre la corrosion.

L'alliage peut également être un acier inoxydable du type 316 tel que défini dans la norme NF EN 10088-2, par exemple, dont le coefficient de dilatation de l'ordre de 16 x 10⁻⁶/K entre 0°C et 100°C, est supérieur à celui du ver re, et la limite d'élasticité de l'ordre de 200 MPa. Cet acier qui contient environ 18% de chrome, 10% de nickel et 3% de molybdène a une très bonne résistance à la corrosion. Mais, du fait de son coefficient de dilatation élevé, il nécessite de disposer un joint élastomère entre le panneau photovoltaïque pour compenser l'écart de dilatation.

Un autre alliage qui peut être utilisé est l'acier F18 MT défini dans la norme NF EN 10088-2 dont le coefficient de dilatation de l'ordre de 10,8 x 10⁻⁶/K entre 0°C et 100°C, est proche de celui de verre. La limi te d'élasticité est de l'ordre de 220 MPa a l'état adoucie, et la tenue à la corrosion de cet alliage est acceptable. Cet acier contient environ 18% de chrome, 2% de molybdène et 0,5% de titane et/ou niobium.

Cette liste d'alliage possible n'est pas limitative et l'homme du métier pourra choisir l'alliage qu'il considère le mieux adapté à chaque application particulière.

En particulier, un acier classique du type acier au carbone peut être utilisé.

En revanche, l'aluminium et ses alliages sont mal adaptés à cette application. En effet, ces matériaux ne permettent pas d'obtenir une rigidité suffisante, ils ne supporteraient pas le pliage et seraient difficiles à souder.

Pour fabriquer un cadre tel qu'il vient d'être décrit, on prépare d'abord une bande prédécoupée avec les lignes de pré pliage et les emboutis nécessaires. Puis, on met en place des connecteurs surmoulés sur les panneaux 31, 32 et 33. On pose alors l'ensemble des câbles de connexion. On notera d'une part que la présence de connecteurs surmoulés n'est pas obligatoire et dépend de l'utilisation qui est envisagée pour les bâtis, et d'autre part, que les dispositions des connecteurs, lorsqu'ils existent, peuvent être différentes de celles qui ont été décrites. L'homme du métier sait adapter les réalisations particulières de chaque bâti à chaque utilisation.

Une fois la bande prédécoupée avec des lignes de pré pliage, les emboutis nécessaires préparés et éventuellement les connecteurs surmoulés sur les panneaux et les câbles de connexion mis en position, on effectue les pliages longitudinaux pour constituer des tubes profilés qui ont l'avantage d'enfermer les câbles lorsque ceux-ci existent.

On effectue alors des soudages lasers longitudinaux. Puis, on plie les quatre segments des tubes le long des lignes de liaison de façon à former le cadre et à solidariser l'ensemble par des soudures laser.

On notera que dans l'exemple qui vient d'être décrit, la structure périphérique est réalisée à partir d'une seule bande. Mais, il est possible de réaliser une structure à l'aide de plusieurs bandes qui peuvent être chacune pliée et les différents ensembles obtenus ainsi étant assemblés ultérieurement.

Naturellement, la forme des bandes et le nombre de lignes de pré pliage sont fonctions de la géométrie particulière choisie pour le cadre.

Cette technique à l'avantage de permettre de fabriquer des cadres ou des structures creuses très légères et en même temps extrêmement rigides. En outre, elle permet d'automatiser facilement la fabrication de telles structures. Elle est décrite de façon générale dans la demande de brevet français FR 00 09334.

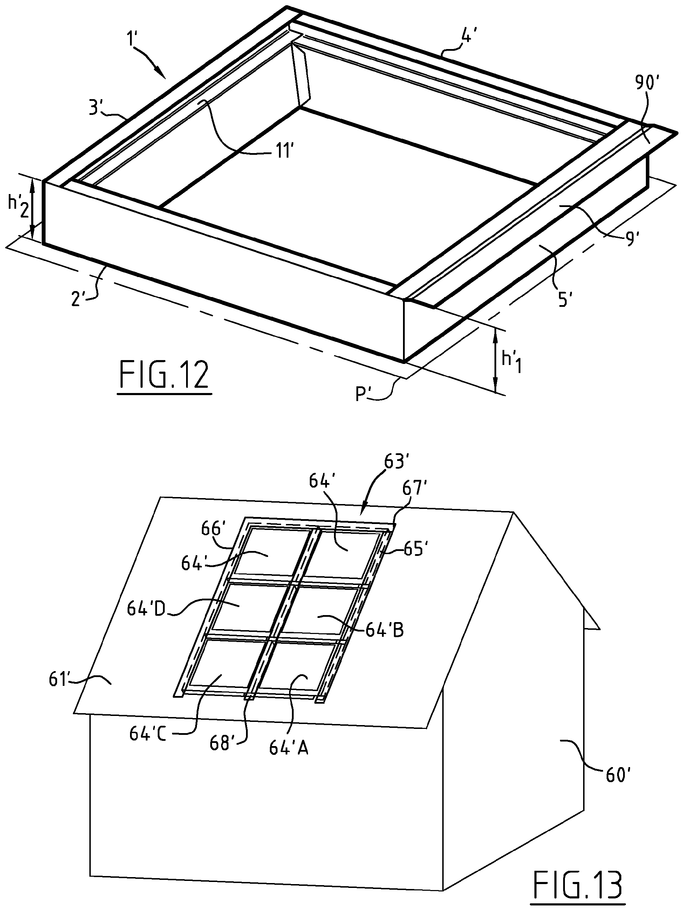

On va maintenant décrire de façon plus succincte un deuxième mode de réalisation de bâti, représenté à la figure 12, et qui peut être réalisé comme le précédent par la technique de pliage d'une ou plusieurs bandes métalliques prédécoupées et assemblées après pliage à l'aide de soudage, tel que le soudage laser.

Le bâti, comme dans le cas précédent, peut être utilisé pour supporter différents types de panneaux et en particulier des panneaux électriquement actifs tels que des panneaux photovoltaïques. Il peut, si cela est nécessaire, comporter des moyens de liaison électrique externe et interne comportant des connexions électriques et des liaisons électriques dissimulées à l'intérieur de ses montants.

Le bâti comprend une structure périphérique 1' qui forme un cadre et qui comprend quatre montants 2', 3', 4' et 5', dont un seul montant, le montant 5', comporte un volet 9' s'étendant vers l'extérieur de façon à former une aile 90'. La hauteur h'1 qui sépare le plan de référence P' et la face inférieure de l'aile extérieur 90' est supérieure ou égale à la hauteur h'2 s'étendant entre la face supérieure du montant 3'et le plan de référence P', de sorte que un montant du type 3' d'un premier bâti peut s'insérer sous l'aile 90' d'un montant d'un deuxième bâti adjacent au premier.

Les montants comportent une gorge périphérique 11' destinée à recevoir un panneau tel qu'un panneau électriquement actif et notamment un panneau photovoltaïque.

Comme dans le cas précédent, le bâti peut comporter des moyens de connexion électrique interne et externes reliés entre eux par des moyens de liaisons électriques dissimulés dans les montants.

De tels bâtis sont destinés à pouvoir être assemblés sur une paroi d'un bâtiment 60', cette paroi étant par exemple un pan de toit 61', de façon à former une surface couverte de panneaux 64' et par exemple photovoltaïques connectés entre eux de façon à constituer un générateur pour produire de l'électricité en utilisant l'énergie solaire.

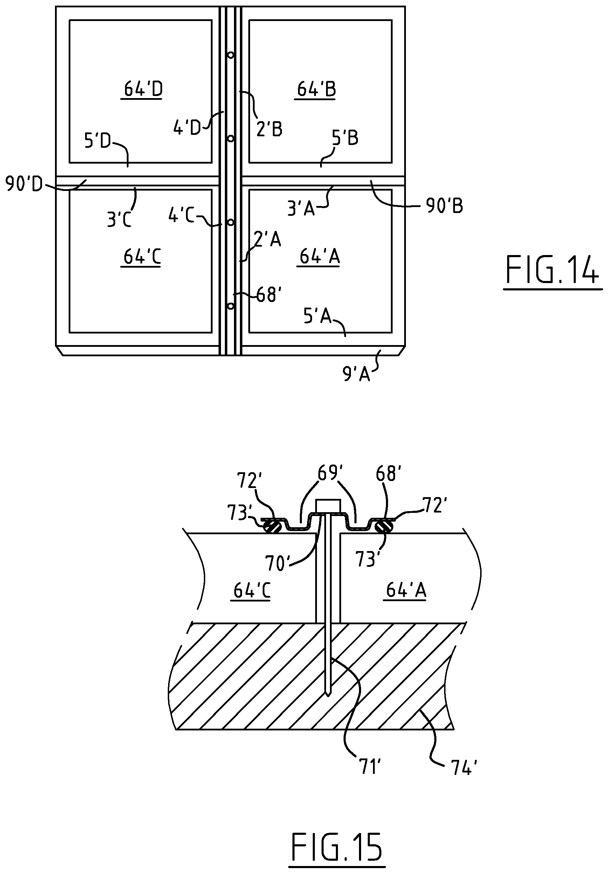

Cet ensemble de panneaux 64' comporte notamment des panneaux 64'A, 64'B, 64'C et 64'D disposés les uns à côtés des autres. Le panneau 64'B est disposé en amont du panneau 64'A, le panneau 64'C est disposé latéralement par rapport au panneau 64'A et le panneau 64'D est disposé au-dessus du panneau 64'C. Comme on le voit mieux sur la figure 14, les ailes 90'B et 90'D s'étendant vers l'extérieur le long des montants 5'B et 5'D des panneaux 64'B et 64'D viennent se superposer au-dessus des montants 3'A et 3'C respectivement des bâtis 64'A et 64'C. Les deux panneaux 64'A et 64'B disposés l'un au dessus de l'autre, et les panneaux 64'C et 64'D disposés également l'un au-dessus de l'autre, sont séparés par un espace sur lesquels il convient d'assurer l'étanchéité.

Comme on le voit sur les figures 14 et 15, cette étanchéité est assurée par une gouttière 68' qui est constituée d'une bande profilée de façon à comporter deux nervures s'étendant vers le bas 69', séparées par une nervure centrale 70' s'étendant sur la longueur du profilé. La nervure centrale 70' comporte des trous pour recevoir des moyens de fixation 71', de l'ensemble sur un support 74'. La tête du moyen de fixation 71' vient en appui sur la nervure centrale 70' qui se situe au-dessus des nervures 69' s'étendant vers le bas. De ce fait, l'eau qui s'écoule dans les nervures 69' ne peut pas pénétrer par les trous par lesquels les moyens de fixation 71' traversent la gouttière. Ces gouttières 68' comportent des ailes 72' qui s'étendent latéralement de part et d'autre et au-dessus des nervures orientées vers le bas 69', et qui viennent recouvrir le bord des panneaux 64'A et 64'C. Des joints 73' sont disposés entre les bâtis 64'A et 64'C d'une part et la gouttière 68'. Avec cette disposition, on peut assurer l'étanchéité entre les différents panneaux. Pour les panneaux disposés en colonne l'un au-dessus de l'autre, l'étanchéité est assurée par le recouvrement des bâtis aval par les ailes externes des bâtis amont, et entre deux colonnes de bâti adjacentes par la gouttière qui est disposée dans la zone de jonction de ces deux colonnes de bâti.

Comme dans le cas précédent, pour assurer l'étanchéité à la périphérie d'une surface recouverte de panneaux supportés par des bâtis tels qu'ils viennent d'être décrits, on dispose sur l'arête supérieure d'une telle surface une cornière de recouvrement 67', et sur les faces latérales des cornières 65' et 66' qui viennent recouvrir le bord des bâtis. On obtient ainsi des ensembles de bâtis supportant des panneaux et notamment des panneaux électriquement actifs tels que des panneaux de cellules photovoltaïques qui peuvent être disposés sur des pans de toit ou sur des façades d'un bâtiment tout en assurant une bonne étanchéité à la pluie notamment.

Les bâtis, tels qu'ils viennent d'être décrits, peuvent avoir des formes diverses que l'homme du métier sait adapter. Différents modes de fabrication sont possibles, notamment le mode de fabrication qui a été décrit par pliage de bandes métalliques. Mais, diverses façons de réaliser une fabrication à partir de bandes métalliques sont possibles, notamment le découpage des bandes peut être adapté par l'homme du métier en fonction des contraintes de fabrication ou des contraintes de géométrie du bâti qu'il souhaite réaliser. En particulier, les bâtis peuvent être réalisés à partir d'une seule bande découpée et pliée ou à partir de plusieurs bandes découpées, pliées puis assemblées après pliage. Dans tous les cas, des soudages doivent être réalisés, ces soudages peuvent être réalisés notamment au laser par exemple par transparence, mais peut être aussi réalisés par tout autre procédé.

Si nécessaire, les assemblages qui servent à rigidifier l'ensemble une fois que les pliages sont réalisés peuvent être également des moyens de fixation par d'autres procédés tels que l'agrafage ou le clinchage.

En outre, l'homme du métier comprendra que les cadres comprennent au moins trois côtés. Ils peuvent, par exemple, comprendre trois côtés, quatre côtés ou six côtés, afin d'avoir des formes triangulaires, carrées, rectangles, losanges ou hexagonales permettant de réaliser des pavages par juxtaposition d'éléments identiques.

## Revendications

1. Bâti support d'un panneau électriquement actif, du type comprenant une structure périphérique (1, 1') destinée à recevoir un panneau (20), constituée d'au moins trois montants (2, 3, 4, 5, 2', 3', 4', 5') formant un cadre dont la face inférieure constitue un plan de référence (P, P'), dont au moins un montant (2, 5 ; 5') comporte une aile (90,100 ; 90') s'étendant sur toute sa longueur et vers l'extérieur du cadre, parallèlement à la face supérieure du cadre, le cadre étant constitué d'au moins une bande métallique prédécoupée (30), emboutie, pliée et assemblée par soudage, et notamment par soudage laser, **caractérisé en ce que** la structure périphérique (1, 1') est creuse, **en ce qu'**il comprend en outre des moyens de connexion interne et externes (14, 16, 17) et un moyen de liaison électrique (18) entre les moyens de connexion interne et externes disposé à l'intérieur de la structure périphérique creuse, **en ce que** la hauteur (h1, h3 ; h'1) entre la face inférieure de l'aile (90, 100 ; 100') s'étendant à l'extérieur du cadre et le plan (P, P') de référence du cadre est supérieure à la hauteur (h2, h4 ; h'2) entre le plan (P, P') de référence du cadre et la face supérieure (7, 8) du montant (3, 4 ; 3') situé à l'opposé du montant (2, 5 ; 5') comportant l'aile s'étendant vers l'extérieur de cadre, et **en ce que** deux montants adjacents (2, 5) comportent chacun une aile (90, 100) s'étendant sur toute sa longueur et vers l'extérieur du cadre, parallèlement à la face supérieure du cadre.

2. Bâti support d'un panneau électriquement actif selon la revendication 1, **caractérisé en ce qu'**à la jonction entre les deux montants (2, 5) du cadre qui portent des ailes s'étendant vers l'extérieur du cadre, au moins une aile (90) s'étend vers l'extérieur du cadre parallèlement à la direction longitudinale du montant qui porte ladite aile, de façon à former une jonction entre les deux ailes adjacentes de telle sorte que les deux ailes adjacentes (90, 100) constituent une aile continue s'étendant le long du coin du cadre formé par les deux montants adjacents.

3. Bâti support d'un panneau électriquement actif selon la revendication 2, **caractérisé en ce que** la jonction entre les deux ailes (90, 100) comporte une zone (457A) emboutie vers le haut du cadre adaptée pour pouvoir s'emboîter sur au moins une extrémité d'une aile s'étendant vers l'extérieur d'un cadre.

4. Bâti support d'un panneau électriquement actif selon la revendication 2 ou la revendication 3, **caractérisé en ce que** les coins (91, 101) des extrémités des ailes adjacentes situées à l'opposé de la zone de jonction des deux ailes, sont coupés à 45°.

5. Bâti support d'un panneau électriquement actif selon l'une quelconque des revendications 1 à 4, **caractérisé en ce que** sa partie centrale (26) délimitée par la structure périphérique est ouverte.

6. Bâti support d'un panneau électriquement actif selon l'une quelconque des revendications 1 à 5, **caractérisé en ce qu'**il est destiné à recevoir un panneau électriquement actif tel qu'un panneau de cellules photovoltaïques (20) et **en ce que** les moyens de connexion interne et externes (14, 16, 17) et le moyen de liaison électrique (18) entre les moyens de connexion externes sont adaptés pour connecter électriquement un panneau électriquement actif porté par le bâti à un circuit extérieur au bâti.

7. Bâti support d'un panneau électriquement actif selon l'une quelconque des revendications 1 à 6, **caractérisé en ce que** la structure périphérique (1, 1') comprend, à sa partie supérieure, une gorge (11, 11') s'étendant sur toute sa périphérie intérieure, et destinée à recevoir la périphérie d'un panneau électriquement actif.

8. Bâti support d'un panneau électriquement actif selon l'une quelconque des revendications 1 à 7, **caractérisé en ce que** la bande métallique est constituée d'un acier bas carbone galvanisé, éventuellement prélaqué.

9. Bâti support d'un panneau électriquement actif selon l'une quelconque des revendications 1 à 7, **caractérisé en ce que** la bande métallique est en acier inoxydable austénitique.

10. Bâti support d'un panneau électriquement actif selon l'une quelconque des revendications 1 à 7, **caractérisé en ce que** la bande métallique est un alliage à dilatation contrôlée du type Fer Nickel ou du type acier inoxydable ferritique.

11. Bâti support d'un panneau électriquement actif selon l'une quelconque des revendications 1 à 7, **caractérisé en ce que** la bande métallique est constituée d'un matériau ayant un coefficient de dilatation compris entre 4 x 10⁻⁶/K et 11 x 10⁻⁶/K, compatible avec celui du verre.

12. Paroi extérieure (61, 61') d'un bâtiment (60, 60') comportant un assemblage (63, 63') de bâti selon l'une quelconque des revendications 1 à 11 **caractérisée en ce que** l'assemblage constitue un pavage.

13. Paroi extérieure (61, 61') d'un bâtiment (60, 60') comportant un assemblage (63, 63') de bâtis selon la revendication 12, **caractérisée en ce que** l'assemblage comprend au moins une colonne de bâtis rectangulaires disposés les uns au dessus des autres, et **en ce qu'**un bâti supérieur (64B, 64D ; 64'B, 64'D) et un bâti inférieur (64A, 64C ; 64'A, 64'C) adjacents sont disposés de telle sorte que le montant de cadre situé à la partie inférieure du bâti supérieur comporte une aile (100B, 100D ; 90'B, 90'D) qui s'étend au dessus du montant (4A, 4C ; 3'A, 3'C) de cadre situé à la partie supérieure du bâti inférieur.

14. Paroi extérieure (61) d'un bâtiment (60) selon la revendication 13, **caractérisée en ce que** l'assemblage de bâtis comprend au moins deux colonnes de bâtis (64A, 64B ; 64C, 64D) adjacentes et **en ce que** le long de la ligne de jonction de deux colonnes adjacentes, les bâtis (64C, 64D) d'une colonne comportent des ailes (90C, 90D) qui s'étendent au dessus des montants latéraux (3A, 3B) des bâtis (64A, 64B) de l'autre colonne.

15. Paroi extérieure d'un bâtiment selon l'une quelconque des revendications 13 et 14, **caractérisée en ce que** des caches (65, 66, 67 ; 65', 66', 67') s'étendent au moins le long des bords latéraux et du bord horizontal supérieur de l'assemblage (63, 63'), en venant en recouvrement des montants des bâtis situés à la périphérie de l'assemblage.

16. Paroi extérieure d'un bâtiment selon l'une quelconque des revendications 13 à 15, **caractérisée en ce que** des joints (73', 205, 207, 215) sont disposés entre les montants de bâtis et les ailes, gouttières et caches venant en recouvrement de ces montants de façon à assurer l'étanchéité.

17. Paroi extérieure d'un bâtiment selon l'une quelconque des revendications 13 à 16, **caractérisée en ce qu'**elle constitue un toit et **en ce que** les bâtis supportent des panneaux photoélectriques.

## Patentansprüche

1. Trägerrahmen für ein elektrisch aktives Paneel von der Art mit einer umfänglichen Struktur (1, 1') für die Aufnahme eines Paneels (20), bestehend aus mindestens drei Ständern (2, 3, 4, 5, 2', 3', 4', 5'), die einen Rahmen bilden, dessen untere Seite eine Bezugsebene (P, P') bildet, wobei mindestens ein Ständer (2, 5; 5') einen Flügel (90,100; 90') aufweist, der sich auf die gesamte Länge und zum Äußeren des Rahmens hin parallel zu der oberen Seite des Rahmens erstreckt, wobei der Rahmen durch mindestens einen vorgeschnittenen metallischen Streifen (30) gebildet ist, der gepresst, gebogen und durch Schweißen, insbesondere durch Laserschweißen zusammengesetzt wird,
**dadurch gekennzeichnet,**
**dass** die umfängliche Struktur (1, 1') hohl Ist,
**dass** er ferner interne und externe Verbindungsmittel (14, 16, 17) sowie ein Mittel für eine elektrische Verbindung (18) zwischen den internen und externen Verbindüngsmitteln aufweist, das in der hohlen umfänglichen Struktur angeordnet ist, und
**dass** die Höhe (h1, h3; h'1) zwischen der unteren Seite des Flügels (90, 100; 100'), der sich außerhalb des Rahmens erstreckt, und der Bezugsebene (P, P') des Rahmens größer ist als die Höhe (h2, h4; h'2) zwischen der Bezugsebene (P, P') des Rahmens und der oberen Seite (7, 8) des Ständers (3, 4; 3'), der dem Ständer (2, 5 ; 5') mit dem sich zum Äußeren des Rahmens hin erstreckenden Flügel gegenüberliegt, und **dass** zwei aneinander grenzende Ständer (2, 5) jeweils einen Flügel (90, 100) aufweisen, der sich auf die gesamte Länge und zum Äußeren des Rahmens hin parallel zu der oberen Seite des Rahmens erstreckt.

2. Trägerrahmen für ein elektrisch aktives Paneel nach Anspruch 1,
**dadurch gekennzeichnet,**
**dass** an der Verbindungsstelle zwischen den zwei Ständern (2, 5) der Rahmens, die Flügel aufweisen, welche sich zum Äußeren des Rahmens hin erstrecken, mindestens ein Flügel (90) sich zum Äußeren des Rahmens hin parallel zu der Längsrichtung des den Flügel aufweisenden Ständers erstreckt, so dass eine Verbindungsstelle zwischen den aneinander grenzenden Flügeln gebildet wird, so dass die zwei aneinander grenzenden Flügel (90, 100) einen durchgehenden Flügel bilden, der sich entlang der Ecke des Rahmens erstreckt, die durch die zwel aneinander grenzenden Ständer gebildet wird.

3. Trägerrahmen für ein elektrisch aktives Paneel nach Anspruch 2,
**dadurch gekennzeichnet,**
**dass** die Verbindungsstelle zwischen den zwei Flügeln (90, 100) einen Bereich (457A) aufweist, der zum oberen Bereich des Rahmens hin gepresst ist und geeignet ist, um auf mindestens ein Ende eines Flügels aufgesteckt zu werden, der sich zum Äußeren eines Rahmens hin erstreckt.

4. Trägerrahmen für ein elektrisch aktives Paneel nach Anspruch 2 oder nach Anspruch 3,
**dadurch gekennzeichnet,**
**dass** die Ecken (91, 101) der Enden der aneinander angrenzenden Flügel, die gegenüber dem Verbindungsbereich der zwei Flügel angeordnet sind, auf 45° geschnitten sind.

5. Trägerrahmen für ein elektrisch aktives Paneel nach einem beliebigen der Ansprüche 1 bis 4,
**dadurch gekennzeichnet,**
**dass** sein mittiger, durch die umfängliche Struktur begrenzter Bereich (26) offen Ist.

6. Trägerrahmen für ein elektrisch aktives Paneel nach einem beliebigen der Ansprüche 1 bis 5,
**dadurch gekennzelchnet,**
**dass** er dazu bestimmt ist, ein elektrisch aktives Paneel wie ein Paneel aus photovoltaischen Zellen (20) aufzunehmen, und
**dass** die internen und externen Verbindungsmittel (14, 16, 17) und das Mittel für eine elektrische Verbindung (18) zwischen den externen Verbindungsmitteln geeignet sind, um ein elektrisch aktives, von dem Trägerrahmen getragenes Paneel mit einem Schaltkreis außerhalb des Trägerrahmens zu verbinden.

7. Trägerrahmen für ein elektrisch aktives Paneel nach einem beliebigen der Ansprüche 1 bis 6,
**dadurch gekennzeichnet,**
**dass** die umfängliche Struktur (1, 1') in ihrem oberen Bereich eine Nut (11, 11') aufweist, die sich auf dem gesamten inneren Umfang erstreckt und dazu bestimmt ist, den Umfang für ein elektrisch aktives Paneel aufzunehmen.

8. Trägerrahmen für ein elektrisch aktives Paneel nach einem beliebigen der Ansprüche 1 bis 7,
**dadurch gekennzeichnet,**
**dass** der metallische Streifen aus verzinktem kohlenstoffarmem, eventuell vorlackiertem Stahl besteht.

9. Trägerrahmen für ein elektrisch aktives Paneel nach einem beliebigen der Ansprüche 1 bis 7,
**dadurch gekennzeichnet,**
**dass** der metallische Streifen aus austenitlschem Edelstahl ist.

10. Trägerrahmen für ein elektrisch aktives Paneel nach einem beliebigen der Ansprüche 1 bis 7,
**dadurch gekennzeichnet,**
**dass** der metallische Streifen eine Legierung mit kontrollierter Dehnung von der Art Elsen-Nickel oder von der Art ferritischem Edelstahl.

11. Trägerrahmen für ein elektrisch aktives Paneel nach einem beliebigen der Ansprüche 1 bis 7,
**dadurch gekennzeichnet,**
**dass** der metallische Streifen aus einem Material mit einem Dehnungskoeffizienten zwischen 4 x 10⁻⁶/K und 11 x 10⁻⁶/K besteht, der mit demjenigen des Glases kompatibel ist.

12. Außenwand (61, 61') eines Gebäudes (60, 60') mit einer Trägerrahmen-Anordnung (63, 63') nach einem beliebigen der Ansprüche 1 bis 11,
**dadurch gekennzeichnet,**
**dass** die Anordnung eine Pflasterung bildet.

13. Außenwand (61 , 61') eines Gebäudes (60, 60') mit einer Anordnung (63, 63') aus Trägerrahmen nach Anspruch 12,
**dadurch gekennzeichnet,**
**dass** die Anordnung mindestens eine Säule aus aufeinander angeordneten rechteckigen Trägerrahmen umfasst und
**dass** ein oberer Trägerrahmen (64B, 64D; 64'B, 64'D) und an daran angrenzender unterer Trägerrahmen (64A, 64C; 64'A, 64'C) derart angeordnet sind,
**dass** der Rahmenständer im unteren Bereich des oberen Trägerrahmens einen Flügel (100B. 100D; 90'B, 90'D) aufweist, der sich über dem Rahmenständer (4A, 4C ; 3'A, 3'C) erstreckt, der sich In dem oberen Bereich des unteren Trägerrahmens befindet.

14. Außenwand (61) eines Gebäudes (60) nach Anspruch 13,
**dadurch gekennzeichnet,**
**dass** die Anordnung aus Trägerrahmen mindestens zwei aneinander angrenzende Säulen aus Trägerrahmen (64A, 64B; 64C, 64D) umfasst und **dass** entlang der Verbindungslinie zweier aneinander angrenzender Säulen die Trägerrahmen (64C, 64D) einer Säule Flügel aufweisen (90C, 90D), die sich über den seitlichen Ständern (3A, 3B) der Trägerrahmen (64A, 64B) der anderen Säule erstrecken.

15. Gebäudeaußenwand nach einem beliebigen der Ansprüche 13 und 14,
**dadurch gekennzeichnet,**
**dass** Blenden (65, 66, 67; 65', 66', 67') sich mindestens entlang der seitlichen Ränder und des oberen horizontalen Randes der Anordnung (63, 63') erstrecken und die Ständer der Trägerrahmen abdecken, die In Bezug auf die Anordnung peripherisch angeordnet sind.

16. Gebäudeaußenwand nach einem beliebigen der Ansprüche 13 bis 15,
**dadurch gekennzeichnet,**
**dass** Dichtungen (73', 205, 207, 215) zwischen den Trägerrahmenständern angeordnet sind und die Flügel, Rinnen und Blenden diese Ständer so abdecken, dass eine Abdichtung sichergestellt Ist.

17. Gebäudeaußenwand nach einem beliebigen der Ansprüche 13 bis 16,
**dadurch gekennzeichnet,**
**dass** sie ein Dach bildet und
**dass** die Trägerrahmen photoelektrische Paneele tragen.

## Claims

1. Support framework for an electrically active panel, of the type comprising a peripheral structure (1, 1') designed to receive a panel (20), constituted by at least three uprights (2, 3, 4, 5, 2', 3', 4', 5') forming a frame the lower face of which constitutes a plane of reference (P, P'), at least one upright (2, 5; 5') of which comprises a flange (90, 100; 90') extending over its entire length and towards the exterior of the frame, parallel to the upper face of the frame, the frame being constituted by at least one precut metal strip (30), which is stamped, folded and assembled by welding, and in particular by laser welding, **characterised in that** the peripheral structure (1, 1') is hollow, **in that** it also comprises internal and external connection means (14, 16, 17) and an electrical connecting means (IS) between the internal and external connection means and disposed in the interior of the hollow peripheral structure, **in that** the height (h1, h3; h'1) between the lower face of the flange (90, 100; 100') extending to the exterior of the frame and the plane of reference (P, P') of the frame is greater than the height (h2, h4; h'2) between the plane of reference (P, P') of the frame and the upper face (7, S) of the upright (3, 4; 3') situated opposite the upright (2, 5; 5') comprising the flange extending towards the exterior of the frame, and **in that** two adjacent uprights (2, 5) each comprise a flange (90, 100) extending over its entire length and towards the exterior of the frame, parallel to the upper face of the frame.

2. Support framework for an electrically active panel according to claim 1, **characterised in that** at the junction between the two uprights (2, 5) of the frame which carry flanges extending towards the exterior of the frame, at least one flange (90) extends towards the exterior of the frame parallel to the longitudinal direction of the upright which carries said flange, in such a way as to form a junction between the two adjacent flanges so that the two adjacent flanges (90, 100) constitute a continuous flange extending along the corner of the frame formed by the two adjacent uprights.

3. Support framework for an electrically active panel according to claim 2, **characterised in that** the junction between the two flanges (90, 100) comprises a zone (457A) which is stamped towards the top of the frame and adapted to be able to engage on at least one end of a flange extending towards the exterior of a frame.

4. Support framework for an electrically active panel according to claim 2 or claim 3, **characterised in that** the corners (91, 101) of the ends of the adjacent flanges situated opposite the zone of junction of the two flanges are cut at 45°.

5. Support framework for an electrically active panel according to any one of claims 1 to 4, **characterised in that** its central portion (26) delimited by the peripheral structure is open.

6. Support framework for an electrically active panel according to any one of claims 1 to 5, **characterised in that** it is designed to receive an electrically active panel such as a panel of photovoltaic cells (20) and **in that** the internal and external connection means (14, 16, 17) and the electrical connecting means (18) between the external connection means are adapted to electrically connect an electrically active panel carried by the framework to a circuit outside the framework,

7. Support framework for an electrically active panel according to any one of claims 1 to 6, **characterised in that** in its upper portion the peripheral structure (1, 1') comprises a groove (11, 11') extending over its entire internal periphery and designed to receive the periphery of an electrically active panel.

8. Support framework for an electrically active panel according to any one of claims 1 to 7, **characterised in that** the metal strip is made of a galvanised low carbon steel, which is optionally prepainted.

9. Support framework for an electrically active panel according to any one of claims 1 to 7, **characterised in that** the metal strip is made of austenitic stainless steel.

10. Support framework for an electrically active panel according to any one of claims 1 to 7, **characterised in that** the metal strip is a controlled expansion alloy of the iron nickel type or of the ferritic stainless steel type.

11. Support framework for an electrically active panel according to any one of claims 1 to 7, **characterised in that** the metal strip is made of a material having a coefficient of expansion of between 4 x 10-⁶/K and 11 x 10⁻⁶/K, compatible with that of glass.

12. External wall (61, 61') of a building (60, 60') comprising an assembly (63, 63') of frameworks according to any one of claims 1 to 11, **characterised in that** the assembly constitutes a paving element.

13. External wall (61, 61') of a building (60, 60') comprising an assembly (63, 63') of frameworks according to claim 12, **characterised in that** the assembly comprises at least one column of rectangular frameworks disposed one on another, and **in that** an adjacent upper framework (64B, 64D; 64'B, 64'D) and lower framework (64A, 64C; 64'A, 64'C) are disposed in such a way that the frame upright situated in the lower portion of the upper framework comprises a flange (100B, 100D; 90'B, 90'D) which extends over the frame upright (4A, 4C; 3'A, 3'C) situated in the upper portion of the lower framework.

14. External wall (61) of a building (60) according to claim 13, **characterised in that** the assembly of frameworks comprises at least two adjacent columns of frameworks (64A, 64B; 64C, 64D), and **in that** along the line of junction of two adjacent columns, the frameworks (64C, 64D) of a column comprise flanges (90C, 90D) which extend over the lateral uprights (3A, 3B) of the frameworks (64A, 64B) of the other column.

15. External wall of a building according to any one of claims 13 and 14, **characterised in that** covers (65, 66, 67; 65', 66', 67') extend at least along the lateral edges and the upper horizontal edge of the assembly (63, 63'), overlapping the uprights of the frameworks situated at the periphery of the assembly.

16. External wall of a building according to any one of claims 13 to 15, **characterised in that** seals (73', 205, 207, 215) are disposed between the uprights of frameworks and the flanges, gutters and covers overlapping these uprights so as to provide sealing.

17. External wall of a building according to any one of claims 13 to 16, **characterised in that** it constitutes a roof and **in that** the frameworks support photoelectric panels,
